# EUROPEAN PATENT SPECIFICATION

(11) **EP 4 244 074 B1**
(45) Date of publication and mention of the grant of the patent: **30.04.2025**
(21) Application number: 21806030.9
(22) Date of filing: 27.10.2021
(51) Int. Cl.: B60B 1/04, B60B 21/06

(54) **SELF-LOCKING NIPPLE FOR SPOKES OF SPOKED WHEELS AND METHOD FOR MANUFACTURING SUCH A NIPPLE**
SELBSTSICHERNDER NIPPEL FÜR SPEICHEN VON SPEICHENRÄDERN UND VERFAHREN ZUR HERSTELLUNG SOLCH EINES NIPPELS
ÉCROU AUTOBLOQUANT POUR RAYONS DE ROUES À RAYONS ET PROCÉDÉ DE FABRICATION D'UN TEL ÉCROU

(30) Priority: 10.11.2020 IT 202000026849
(43) Date of publication of application: 20.09.2023
(73) Proprietor: Alpina Raggi S.P.A., 23871 Lomagna (LC) (IT)
(72) Inventor: CAPPELLOTTO, Guido, 20862 Arcore (MB) (IT)
(74) Representative: Cantaluppi, Stefano
(86) International application number: PCT/IB2021/059934
(87) International publication number: WO 2022/101730

(56) References cited:
- EP-A1- 1 559 582
- EP-A1- 2 525 985
- US-A- 1 893 067
- US-A- 5 904 461

## Description

The present invention relates to a self-locking nipple for spokes of spoked wheels and a method for manufacturing such a nipple.

Nipples of the self-locking type are widely used in the construction of spoked wheels in order to prevent the loosening of the nipple which is screwed to the spoke without using thread-locking liquids and the like.

A self-locking nipple which is known and particularly appreciated in the field of cycling and motorcycling is described in US6205664 from the same Applicant.

Other nipples of the same type are described in EP2525985, WO2004/065138 and WO2012/113599.

All the above-mentioned nipples have a threaded axial seat, at one end of which, generally in the region of the head of the nipple, there is applied an insert made of deformable resin, generally a polyamide resin. The insert is bored so as to define a passage, the internal diameter of which is less than the crest diameter of the thread of the spoke. In this manner, when the spoke is screwed in the nipple, it deforms the walls of the passage of the insert while being inserted therein with an interference fit.

This interference produces the desired locking between the thread of the spoke and the nipple, preventing the accidental unscrewing thereof.

In all the above-mentioned cases, the insert is applied to an axial end of the nipple, generally the end furthest away from the rod of the nipple itself. This involves the spoke having to be long enough to reach the insert and to be introduced into the passage thereof because otherwise the self-locking effect of the nipple would inevitably not be provided.

In order to ensure that this is brought about, it is necessary to construct spokes which are needlessly long and in particular to process the threaded end over a significant portion so that the thread of the spoke can engage with the entire length of the thread of the nipple and become completely inserted in the passage of the insert made of resin.

Therefore, this technique requires a certain waste of material of the spoke, a greater overall weight of the wheel and in particular a weight which is distributed at the distal ends of the spokes with respect to the hub, which in turn causes undesirable inertia effects, and a great expenditure of energy and wear of the tools for processing spoke portions which in reality do not contribute to the mechanical resistance of the wheel.

A self-locking nipple for the spokes of a bicycle wheel, wherein the insert is applied in an intermediate axial position of the nipple, is known from EP1559582A1. However, it is evident that, as a result of the over-dimensioning of the insert with respect to the diameter of the threaded hole of the nipple, the axial insertion process of the insert into the nipple presents substantial difficulties, particularly when considering the fact that the material of the insert has to provide a given resistance to deformation in order then to also ensure adequate engagement with the thread of the spoke following repeated screwing and unscrewing operations thereof.

On the contrary, it would be desirable to provide a self-locking nipple, in which the insert can be applied rapidly and precisely by means of a repeatable process.

Furthermore, it must be observed that the nipple described in EP1559582A1 can be manoeuvred only by means of a tool which extends axially from the head of the nipple itself. Therefore, this nipple cannot be manoeuvred without at least partially disassembling the wheel.

On the contrary, it would be desirable to provide a self-locking nipple which allows adjustment of the tension of the respective spoke without having to disassemble the wheel.

The technical problem addressed by the present invention is to provide a self-locking nipple for spokes of spoked wheels which is structurally and functionally configured to at least partially overcome one or more of the disadvantages set out with reference to the cited prior art.

This problem is solved by the invention by means of a nipple for spokes of spoked wheels including one or more of the features mentioned in the appended claims.

In one embodiment, the nipple includes a rod with an axial development, a threaded hole which is formed axially in the rod, the thread of the hole defining a root diameter and a crest diameter, a head which is widened with respect to the rod and a deformable insert which is inserted in a seat which is axially aligned with the hole, the insert, at least when it is inserted in the seat, having a passage for a threaded spoke end, the internal diameter of which is less than the root diameter of the thread of the hole so as to interfere with the thread of the spoke when it is screwed into the threaded hole. The seat is formed in an intermediate position of the hole and, preferably, in a position with spacing from the head, that is to say, between the head and an axially opposite opening of the threaded hole.

It may be noted that, in this context, the term "intermediate position" of the hole is intended to be understood to be an axial intermediate position of the hole.

In one embodiment of the invention, the passage of the insert, when it is inserted in the seat, has an internal diameter which is approximately identical to the crest diameter of the thread of the hole and so as to generate an interference fit with the thread of the spoke.

Preferably, the seat for receiving the insert has such a radial depth that the insert is retained axially in the seat.

It is also provided for the insert to be radially contractile, in particular in a resilient manner, in order to allow it to be inserted in the respective seat from the exterior, through the axial hole of the nipple.

The insert has a discontinuous mantle and is made radially contractile by the discontinuous mantle. This radial contractility is improved if the insert has the discontinuous mantle and is preferably cylindrical and even more preferably has a mantle which is interrupted circumferentially by a notch in order to promote the radial contraction thereof. It may be noted that, in this context, the term "mantle" is preferably intended to be understood to be the wall of the insert and more particularly the cylindrical wall thereof.

As a result of the discontinuity of the mantle, the insert has a generous radial contractility which allows an easy and precise axial insertion of the insert itself in depth through the threaded hole of the nipple, without however that the aforementioned radial contractility presupposes that the insert is constructed from a particularly yielding material.

As a result of the radially contractile nature provided by the discontinuity of the mantle, therefore, it is also possible to construct the insert from a rather tough material, such as, for example, Nylon, which has the advantage of also withstanding repeated screwing and unscrewing actions of the spoke.

In one embodiment, the insert has a metal core which can improve the elastic return thereof once it has been inserted in the respective seat. Therefore, the metal core has the value of increasing the precision and repeatability of the process of inserting the insert in the respective seat.

The core is preferably arranged circumferentially and is also interrupted at the notch of the mantle.

A preferred material for constructing the metal core of the insert is harmonic wire or spring steel.

Advantageously, the insert is constructed from plastics material, preferably from Nylon.

A preferred method for manufacturing a nipple according to the invention comprises the steps of:
- providing a semi-finished product which is formed so as to define a rod and a head which is widened with respect to the rod;
- axially drilling the semi-finished product;
- providing a radially contractile insert which has a discontinuous mantle, wherein the insert is made radially contractile by the discontinuous mantle;
- forming in the drilled axial hole a seat for the radially contractile insert, the seat being constructed in an intermediate position of the hole which is spaced apart from the head;
- tapping the axial hole;
- inserting the radially contractile insert in the seat.

The features and advantages of the invention will be better appreciated from the following detailed description of a preferred though non-exclusive embodiment which is illustrated by way of non-limiting example with reference to the appended drawings, in which:

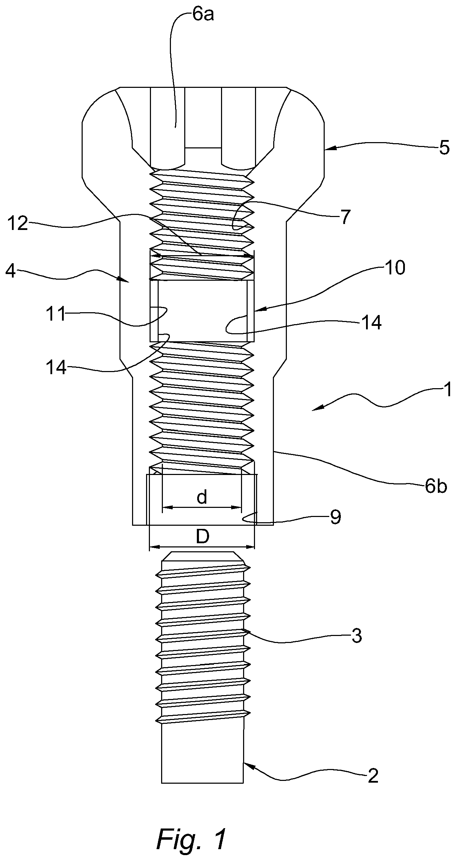

- Figure 1 is a view of a nipple and a portion of a spoke according to the present invention, in which the nipple is illustrated as an axial section;
- Figure 2 is an exploded view of the nipple of Figure 1;
- Figures 3 to 7 are schematic views of the nipple of the preceding Figures in different steps of the manufacture thereof.

In the Figures, there is generally designated 1 a nipple which is manufactured according to the present invention. The nipple 1 is intended to be applied to the threaded end 3 of a spoke 2 in order to construct a spoked wheel which is not illustrated.

The nipple 1 comprises a rod 4 and a head 5 which is widened with respect to the rod 4. There are preferably formed in the head and in the rod respective manoeuvring keys 6a, 6b in order to rotate the nipple 1 with respect to the spoke for screwing purposes. The first manoeuvring key 6a is preferably built in an axial recess of the head 5 (but may also be constructed, for example, by conferring a polygonal shape to the head itself) and may have different forms which are known per se, for example, with a hexagon socket, a torqx profile, Philips profile, notched profile, and the like. In this manner, the nipple can be manoeuvred by means of a tool which extends from the first manoeuvring key 6a along the axis of the nipple.

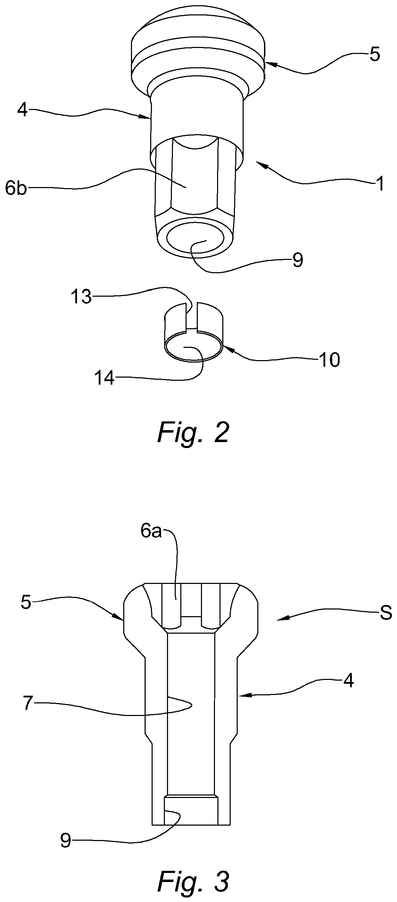

The second manoeuvring key 6b is preferably constructed in the form of a polygonal impression (for example, a square impression, as shown in Figure 2 or a hexagonal impression) in the portion of the rod axially opposite and distal with respect to the head 5. In this manner, the nipple is also accessible and manoeuvrable when it is mounted on the wheel so as to allow adjustment of the tension of the spoke without having to disassemble the wheel, by means of a tool which extends from the second manoeuvring key 6b in a direction transverse to the axis of the nipple.

The nipple further has a tapped axial hole 7, preferably a through-hole (or, alternatively, a blind hole) which extends from an opening 9 to the distal end with respect to the head 5 as far as the seat of the first manoeuvring key 6a. The thread of the hole 7 defines a root diameter D and a crest diameter d.

The nipple 1 is further provided with an insert 10 made from deformable resin, for example, a polyamide resin.

The insert 10 is preferably formed with a cylindrical tubular (annular) shape which is radially contractile so as to be able to be installed from outside in a seat 11 which is formed in the hole 7 in an intermediate position thereof between the head 5 and the opening 9. The seat 11 preferably has a shape with a cylindrical mantle and has a diameter 12 which is preferably greater than the crest diameter d and even more preferably greater than or equal to the root diameter D of the thread. In this manner, the radial depth of the seat 11 is such that the insert 10 is axially retained in the seat 11. The seat 11 further has an axial extent which is sufficient to receive and retain the insert 10.

In order to make the insert 10 radially contractile, there is provision for it to be constructed with a discontinuous mantle, for example, by providing a notch 13. Alternatively, there is provision for using the resilience of the insert 10 itself or a multiplicity of partial discontinuities in the mantle thereof.

There is defined in the insert 10 a passage 14, the internal diameter of which, at least when it is inserted in the seat 11, is less than the root diameter of the thread of the hole 7 so as to interfere with the thread 3 of the spoke 2 when it is screwed in the threaded hole 7. This generates the self-locking connection between the spoke and nipple.

The seat 11 is preferably formed in a position of the hole 7 which is axially intermediate between the head 5 and the opening 9. This positioning allows the use of shorter spokes with respect to what is required by the known self-locking nipples, in any case ensuring both an optimum self-locking function and correct sealing of the spoke/nipple connection. In order to allow this connection, the seat 11 is spaced apart from the opening 9 of the nipple by at least three or more threads.

In some embodiments, in order to promote the widening of the insert 10 once it is inserted in the seat 11, there is provision for a metal core (not illustrated) to be present in the mass of resin, for example, made of harmonic steel wire which is preferably arranged circumferentially and embedded in the insert 10 at an approximately median diameter thereof. In this manner, the insert 10 is radially contracted for the insertion thereof in the seat 11 but is urged both by the elastic return thereof and by the elastic return of the metal core to expand radially once it is released in the seat 11.

The metal core is also interrupted at the notch 13 of the insert 10.

In order to construct the nipple, a semi-finished product S which is obtained by moulding from a metal rod which is straightened and cut beforehand is taken as a basis; the semi-finished product S is formed so as to define the external geometries of the nipple, including the head 5, the rod 4 and the respective manoeuvring keys 6a, 6b.

The semi-finished product S is therefore axially drilled so as to obtain the hole 7 and the opening 9, as shown in Figure 3.

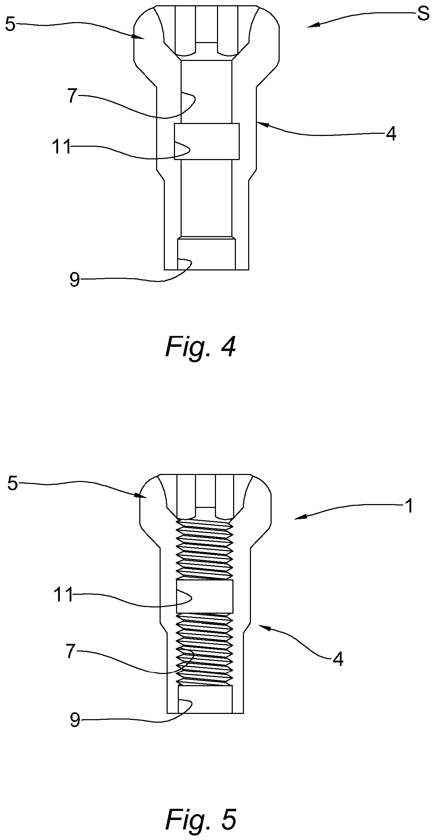

The processing of the seat 11 is then carried out, as shown in Figure 4, and the tapping of the hole 7, as shown in Figure 5.

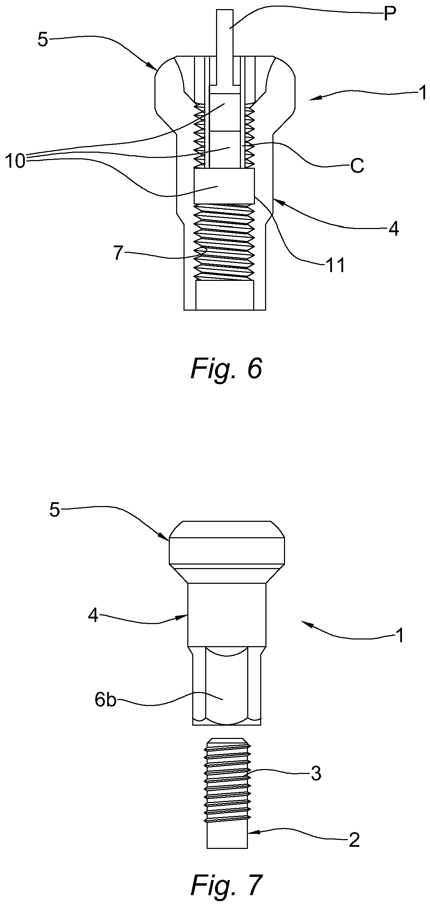

Meanwhile, the insert is provided in a radially contracted condition in a loader C, the external diameter of which is less than the crest diameter d of the thread of the hole 7 so as to be able to be introduced, preferably from the head 5 side, inside the hole 7 up to a location near the seat 11, as shown in Figure 6.

In order to increase the precision and the repeatability of the application process of the insert 10 in the nipple, it is preferable for the insert to have a discontinuous mantle (so as to improve the radial contraction of the insert when it is inserted in the loader C) and a metal core (so as to improve the elastic return of the insert once it is inserted in the respective seat 11).

The radially contracted insert is therefore placed in the seat 11, where it expands radially, regaining an external diameter identical to that of the seat 11 itself so as to remain embedded in the seat between the shoulders formed by the end threads of the hole 7 close to the seat 11 itself.

Figure 7 shows the nipple 1 ready to receive the threaded end 3 of a spoke 2. When the nipple is screwed onto the threaded end 3 of the spoke 2, the thread of the spoke is screwed into the thread of the nipple until reaching the insert 10.

The screwing action then continues in the passage 14 of the insert, deforming the plastics material of the insert as a result of the interference effect between the internal diameter of the insert and the thread of the spoke. At the limit, it is sufficient for the length of the spoke to be such as to be at least partially screwed in the insert 10 of the nipple in order to obtain a self-locking connection. However, it is preferable for the length of the spoke to be selected so that the nipple is screwed on the spoke, with the wheel mounted, with engagement of both the threaded portions of the hole 7 separate from the seat 11.

It is preferable for the loader C to be constructed so as to contain a plurality of inserts 10 which can therefore be placed one at a time in the respective seats 11 of nipples being processed following the sliding thereof into the loader C via the force being applied thereto by means of a piston P.

The invention thereby solves the problem proposed, at the same time achieving a number of advantages, including:
- greater safety because a self-locking connection is obtained between the spoke and the nipple even in cases in which the threaded end of the spoke does not reach the head of the nipple,
- possibility of reducing the longitudinal extent of the spoke with a resultant saving of material and a reduction of the weight distributed at the distal ends of the spokes with respect to the hub,
- simplicity of the method for manufacturing the nipple.

## Claims

1. A nipple (1) for spokes of spoked wheels including a rod (4) with an axial development, a threaded hole (7) which is formed axially in the rod (4), the thread of the hole (7) defining a root diameter (D) and a crest diameter (d), a head (5) which is widened with respect to the rod (4) and a deformable insert (10) which is inserted in a seat (11) which is axially aligned with the hole (7), the insert (10), at least when it is inserted in the seat (11), having a passage (14) for a threaded spoke end, the internal diameter of which is less than the root diameter (D) of the thread of the hole (7) so as to interfere with the thread of the spoke when it is screwed into the threaded hole (7), wherein the seat (11) is formed in an intermediate axial position of the hole (7), **characterized in that** the insert (10) is radially contractile and has a discontinuous mantle, wherein the insert (10) is made radially contractile by the discontinuous mantle.

2. A nipple (1) according to claim 1, wherein the passage (14) of the insert (10), when it is inserted in the seat (11), has an internal diameter which is approximately identical to the crest diameter (d) of the thread of the hole (7) and so as to generate an interference fit with the thread of the spoke.

3. A nipple (1) according to claim 1 or 2, wherein the seat (11) for receiving the insert (10) has such a radial depth that the insert (10) is retained axially in the seat (11).

4. A nipple (1) according to one or more of the preceding claims, wherein the insert (10) is cylindrical and has a mantle which is interrupted circumferentially by a notch (13) in order to promote the radial contraction thereof.

5. A nipple (1) according to one or more of the preceding claims, wherein the insert (10) is constructed from plastics material, preferably wherein the insert (10) is made from Nylon.

6. A nipple (1) according to one or more of the preceding claims, wherein the insert (10) has a metal core.

7. A nipple (1) according to claim 6, wherein the core is arranged circumferentially and is also interrupted at the notch (13) of the mantle.

8. A nipple (1) according to claim 6 or 7, wherein the core of the insert (10) is constructed from harmonic wire or spring steel.

9. A nipple (1) according to any one of the preceding claims, wherein there are formed in the head (5) and in the rod (4) respective manoeuvring keys (6a, 6b) in order to rotate the nipple (1) with respect to the spoke for screwing purposes.

10. A nipple (1) according to claim 9, wherein a first manoeuvring key (6a) is built in an axial recess of the head (5) or is constructed by conferring a polygonal shape to the head itself.

11. A nipple (1) according to claim 9 or 10, wherein a second manoeuvring key (6b) is constructed in the form of a polygonal impression in the portion of the rod (4) axially opposite and distal with respect to the head (5).

12. A nipple (1) according to any one of the preceding claims when dependent on claim 4, wherein the notch (13) extends axially between the opposite ends of the insert (10).

13. A method for manufacturing a nipple (1) according to one or more of the preceding claims, comprising the steps of:
- providing a semi-finished product (S) which is formed so as to define a rod (4) and a head (5) which is widened with respect to the rod (4);
- axially drilling the semi-finished product (S);
- providing a radially contractile insert (10) which has a discontinuous mantle, wherein the insert (10) is made radially contractile by the discontinuous mantle;
- forming in the drilled axial hole (7) a seat (11) for the radially contractile insert (10), the seat (11) being constructed in an intermediate position of the hole (7) which is spaced apart from the head (5);
- tapping the hole (7);
- inserting the radially contractile insert (10) in the seat (11).

14. A method according to claim 13, comprising providing a loader (C), providing the loader (C) with an external diameter which is less than the crest diameter (d) of the thread of the hole (7), and introducing the insert (10) in a radially contracted condition in the loader (C) inside the hole (7) up to a location near the seat (11).

15. A method according to claim 14, comprising providing a piston (P) and constructing the loader (C) so as to contain a plurality of inserts (10) to be placed one at a time in the respective seats (11) of nipples being processed following the sliding thereof into the loader (C) via the force being applied thereto by means of the piston (P).

## Patentansprüche

1. Nippel (1) für Speichen von Speichenrädern mit einer axial verlaufenden Stange (4), mit einem Gewindeloch (7), das axial in der Stange (4) ausgebildet ist, wobei das Gewinde des Lochs (7) einen Kerndurchmesser (D) und einen Scheiteldurchmesser (d) bildet, mit einem Kopf (5), der in Bezug auf die Stange (4) verbreitert ist, und mit einem verformbaren Einsatz (10), der in einen Sitz (11) eingesetzt wird, der axial mit dem Loch (7) ausgerichtet ist, wobei der Einsatz (10), zumindest wenn er in den Sitz (11) eingesetzt ist, einen Durchgang (14) für ein mit einem Gewinde versehenes Speichenende aufweist, dessen Innendurchmesser kleiner ist als der Kerndurchmesser (D) des Gewindes des Lochs (7), um mit dem Gewinde der Speiche in Eingriff zu kommen, wenn diese in das Gewindeloch (7) geschraubt wird, wobei der Sitz (11) in einer axialen Zwischenposition des Lochs (7) ausgebildet ist, **dadurch gekennzeichnet, dass** der Einsatz (10) radial zusammenziehbar ist und einen diskontinuierlichen Mantel aufweist, wobei der Einsatz (10) durch den diskontinuierlichen Mantel radial zusammenziehbar gemacht wird.

2. Nippel (1) nach Anspruch 1, wobei der Durchgang (14) des Einsatzes (10), wenn er in den Sitz (11) eingesetzt ist, einen Innendurchmesser aufweist, der ungefähr mit dem Scheiteldurchmesser (d) des Gewindes des Lochs (7) identisch ist, um eine Presspassung mit dem Gewinde der Speiche zu erzeugen.

3. Nippel (1) nach Anspruch 1 oder 2, wobei der Sitz (11) zur Aufnahme des Einsatzes (10) eine radiale Tiefe aufweist, sodass der Einsatz (10) axial im Sitz (11) gehalten wird.

4. Nippel (1) nach einem oder mehreren der vorhergehenden Ansprüche, wobei der Einsatz (10) zylindrisch ist und einen Mantel aufweist, der umlaufend durch eine Kerbe (13) unterbrochen ist, um dessen radiale Kontraktion zu fördern.

5. Nippel (1) nach einem oder mehreren der vorhergehenden Ansprüche, wobei der Einsatz (10) vorzugsweise aus Kunststoffmaterial hergestellt ist, wobei der Einsatz (10) aus Nylon besteht.

6. Nippel (1) nach einem oder mehreren der vorhergehenden Ansprüche, wobei der Einsatz (10) einen Metallkern aufweist.

7. Nippel (1) nach Anspruch 6, wobei der Kern umlaufend angeordnet ist und an der Kerbe (13) des Mantels auch unterbrochen ist.

8. Nippel (1) nach Anspruch 6 oder 7, wobei der Kern des Einsatzes (10) aus Walzdraht oder Federstahl besteht.

9. Nippel (1) nach einem der vorhergehenden Ansprüche, wobei im Kopf (5) und in der Stange (4) entsprechende Betätigungstasten (6a, 6b) ausgebildet sind, um den Nippel (1) zum Schrauben in Bezug auf die Speiche zu drehen.

10. Nippel (1) nach Anspruch 9, wobei eine erste Betätigungstaste (6a) in einer axialen Aussparung des Kopfes (5) eingebaut ist oder ausgebildet ist, dass dem Kopf selbst eine polygonale Form verliehen wird.

11. Nippel (1) nach Anspruch 9 oder 10, wobei eine zweite Betätigungstaste (6b) in Form einer polygonalen Vertiefung im Abschnitt der Stange (4), die sich axial gegenüber und distal zum Kopf (5) befindet, ausgebildet ist.

12. Nippel (1) nach einem der vorhergehenden Ansprüche, wenn abhängig von Anspruch 4, wobei sich die Kerbe (13) axial zwischen den gegenüberliegenden Enden des Einsatzes (10) erstreckt.

13. Verfahren zur Herstellung eines Nippels (1) nach einem oder mehreren der vorhergehenden Ansprüche mit den Schritten:
- Vorsehen eines Halbzeugs (S), das derart geformt ist, um eine Stange (4) und einen gegenüber der Stange (4) verbreiterten Kopf (5) zu bilden;
- axiales Bohren des Halbzeugs (S);
- Vorsehen eines radial zusammenziehbaren Einsatzes (10), der einen diskontinuierlichen Mantel aufweist, wobei der Einsatz (10) durch den diskontinuierlichen Mantel radial zusammenziehbar gemacht wird;
- Bilden eines Sitzes (11) für den radial zusammenziehbaren Einsatz (10) im gebohrten axialen Loch (7), wobei der Sitz (11) in einer Zwischenposition des Lochs (7) ausgebildet ist, die vom Kopf (5) beabstandet ist;
- Gewindebohren des Lochs (7);
- Einsetzen des radial zusammenziehbaren Einsatzes (10) in den Sitz (11).

14. Verfahren nach Anspruch 13 mit einem Vorsehen eines Laders (C), einem Vorsehen des Laders (C) mit einem Außendurchmesser, der kleiner ist als der Scheiteldurchmesser (d) des Gewindes des Lochs (7) und einem Einführen des Einsatzes (10) in einem radial zusammengezogenen Zustand in den Lader (C) innerhalb des Lochs (7) bis zu einer Stelle in der Nähe des Sitzes (11).

15. Verfahren nach Anspruch 14 mit einem Vorsehen eines Kolbens (P) und einem Konstruieren des Laders (C), um eine Mehrzahl von Einsätzen (10) aufzunehmen, die einer nach dem einander in den jeweiligen Sitzen (11) der zu bearbeitenden Nippel nach ihrem Einschieben in den Lader (C) durch die Kraft, die mittels des Kolbens (P) auf sie aufgebracht wird, angeordnet werden.

## Revendications

1. Écrou (1) pour rayons de roues à rayons comprenant une tige (4) avec un développement axial, un trou fileté (7) qui est formé axialement dans la tige (4), le filetage du trou (7) définissant un diamètre de base (D) et un diamètre de crête (d), une tête (5) qui est élargie par rapport à la tige (4) et un insert déformable (10) qui est inséré dans un siège (11) qui est axialement aligné avec le trou (7), l'insert (10), au moins lorsqu'il est inséré dans le siège (11), ayant un passage (14) pour une extrémité de rayon fileté, dont le diamètre interne est inférieur au diamètre de base (D) du filetage du trou (7) afin d'interférer avec le filetage du rayon lorsqu'il est vissé dans le trou fileté (7), dans lequel le siège (11) est formé dans une position axiale intermédiaire du trou (7), **caractérisé en ce que** :
l'insert (10) peut se contracter radialement et a un manteau discontinu,
dans lequel l'insert (10) est rendu radialement contractile par le manteau discontinu.

2. Écrou (1) selon la revendication 1, dans lequel le passage (14) de l'insert (10), lorsqu'il est inséré dans le siège (11), a un diamètre interne qui est approximativement identique au diamètre de crête (d) du filetage du trou (7) et afin de générer un ajustement avec serrage avec le filetage du rayon.

3. Écrou (1) selon la revendication 1 ou 2, dans lequel le siège (11) pour recevoir l'insert (10) a une profondeur radiale telle que l'insert (10) est retenu axialement dans le siège (11).

4. Écrou (1) selon une ou plusieurs des revendications précédentes, dans lequel l'insert (10) est cylindrique et a un manteau qui est interrompu de manière circonférentielle par une encoche (13) afin de favoriser sa contraction radiale.

5. Écrou (1) selon une ou plusieurs des revendications précédentes, dans lequel l'insert (10) est fabriqué à partir de matière plastique, de préférence dans lequel l'insert (10) est réalisé à partir de nylon.

6. Écrou (1) selon une ou plusieurs des revendications précédentes, dans lequel l'insert (10) a un noyau métallique.

7. Écrou (1) selon la revendication 6, dans lequel le noyau est agencé de manière circonférentielle et est également interrompu au niveau de l'encoche (13) du manteau.

8. Écrou (1) selon la revendication 6 ou 7, dans lequel le noyau de l'insert (10) est fabriqué avec un fil harmonique ou de l'acier à ressort.

9. Écrou (1) selon l'une quelconque des revendications précédentes, dans lequel on forme, dans la tête (5) et dans la tige (4), des clés de manœuvre (6a, 6b) respectives afin de faire tourner l'écrou (1) par rapport au rayon à des fins de vissage.

10. Écrou (1) selon la revendication 9, dans lequel une première clé de manœuvre (6a) est intégrée dans un évidement axial de la tête (5) ou est fabriquée en conférant une forme polygonale à la tête elle-même.

11. Écrou (1) selon la revendication 9 ou 10, dans lequel une seconde clé de manœuvre (6b) est fabriquée sous la forme d'une empreinte polygonale dans la partie de la tige (4) axialement opposée et distale par rapport à la tête (5).

12. Écrou (1) selon l'une quelconque des revendications précédentes, lorsqu'elle dépend de la revendication 4, dans lequel l'encoche (13) s'étend axialement entre les extrémités opposées de l'insert (10).

13. Procédé pour fabriquer un écrou (1) selon une ou plusieurs des revendications précédentes, comprenant les étapes consistant à :
prévoir un produit semi-fini (S) qui est formé afin de définir une tige (4) et une tête (5) qui est élargie par rapport à la tige (4) ;
percer axialement le produit semi-fini (S) ;
prévoir un insert (10) radialement contractile qui a un manteau discontinu, dans lequel l'insert (10) est rendu radialement contractile par le manteau discontinu ;
former, dans le trou axial (7) percé, un siège (11) pour l'insert (10) radialement contractile, le siège (11) étant construit dans une position intermédiaire du trou (7) qui est espacé de la tête (5) ;
tarauder le trou (7) ;
insérer l'insert (10) radialement contractile dans le siège (11).

14. Procédé selon la revendication 13, comprenant les étapes consistant à prévoir un chargeur (C), prévoir le chargeur (C) avec un diamètre externe qui est inférieur au diamètre de crête (d) du filetage du trou (7) et introduire l'insert (10) dans une condition radialement contractée dans le chargeur (C) à l'intérieur du trou (7) jusqu'à un emplacement à proximité du siège (11).

15. Procédé selon la revendication 14, comprenant les étapes consistant à prévoir un piston (P) et à construire le chargeur (C) afin de contenir une pluralité d'inserts (10) à placer un par un dans les sièges (11) respectifs des écrous qui sont traités suite à leur coulissement dans le chargeur (C) via la force qui y est appliquée au moyen du piston (P).
